# FASCICULE DE BREVET EUROPEEN

(11) **EP 4 540 119 B1**
(45) Date de publication et mention de la délivrance du brevet: **03.06.2026**
(21) Numéro de dépôt: 23725384.4
(22) Date de dépôt: 19.04.2023
(51) Int. Cl.: B60W 60/00, B60W 30/12, B60W 30/18, G06V 20/58, G06V 20/56, B62D 15/02

(54) **GESTION PAR UN VÉHICULE AUTONOME DES BRETELLES DE SORTIE POUR LA RÉALISATION DE MANOEUVRES DE CHANGEMENT DE VOIE DE CIRCULATION**
VERWALTUNG VON AUSGANGSRAMPEN DURCH EIN AUTONOMES FAHRZEUG ZUR DURCHFÜHRUNG VON SPURWECHSELMANÖVERN
MANAGEMENT OF EXIT RAMPS BY AN AUTONOMOUS VEHICLE TO PERFORM LANE CHANGE MANEUVERS

(30) Priorité: 15.06.2022 FR 2205791
(43) Date de publication de la demande: 23.04.2025
(73) Titulaire: Stellantis Auto SAS, 78300 Poissy (FR)
(72) Inventeur: EL HANBALI, Hamza, Casablanca, 20580 (MA); ET-THAQFY, Yassine, Casablanca, 20620 (MA); LAHLOU, Zoubida, Casablanca, 20190 (MA)
(74) Mandataire: ESIP
(86) Numéro de dépôt international: PCT/FR2023/050556
(87) Numéro de publication internationale: WO 2023/242488

(56) Documents cités:
- WO-A1-2019/166714
- DE-A1- 102021 003 682
- US-A1- 2016 272 203

## Description

La présente invention revendique la priorité de la demande française 2205791 déposée le 15.06.2022.

### Domaine technique

La présente invention concerne le domaine du véhicule autonome, notamment la voiture autonome. L'invention porte en particulier sur un procédé de conduite autonome d'un véhicule automobile sur les voies de circulation d'une route au moyen d'un dispositif informatique embarqué à bord du véhicule. L'invention concerne également un dispositif mettant en œuvre un tel procédé, ainsi qu'un véhicule comprenant un tel dispositif.

### État de la technique antérieure

Il est connu que certains systèmes d'aide à la conduite de véhicules actuels fournissent des fonctionnalités qui permettent la prise en charge du guidage autonome ou semi autonome des véhicules dans certains environnements de conduite particuliers (e.g. autoroute, voie rapide, agglomération, etc.). Et pour satisfaire les prescriptions du code de la route, qui stipule qu'un véhicule automobile doit se positionner le plus à droite possible de la chaussée, certains systèmes connus initient la réalisation de manœuvres de changement de voie de circulation pour rejoindre la voie de circulation adjacente à droite lorsque celle-ci est libre. Cependant, cet automatisme de replacement sur la voie libre de droite s'avère délétère dans le contexte de la conduite autonome sur des routes à chaussées séparées, en particulier en regard des bretelles de sortie de ces routes. En effet, dans une situation dans laquelle un véhicule approche d'une bretelle de sortie d'une route à chaussées séparées, un système d'aide à la conduite qui initie une manœuvre de changement de voie de circulation vers la voie de circulation adjacente à droite si elle est libre risque d'engager le véhicule dans la bretelle de sortie. Le conducteur se verrait alors contraint de reprendre la main dans l'urgence, en étant éventuellement contraint de réaliser une manœuvre brusque pour quitter la bretelle de sortie. Une telle situation causerait sans aucun doute stress et inconfort qui mettent en péril la sécurité de la conduite.

En particulier, le document WO 2019/166714 A1 décrit un procédé assistant le conducteur d'un véhicule et comprenant une étape dans laquelle on analyse les données d'environnement pour déterminer une variation de limitation de vitesse corrélée temporellement à une variation du nombre de voies de circulation, et en présence d'une telle détermination on considère que le véhicule est situé à proximité d'une zone de passage obligé et on génère une alerte requérant que le conducteur reprenne le contrôle de la conduite pendant la traversée de cette zone de passage obligé ou que les moyens de contrôle mettent en œuvre une stratégie de conduite automatisée spécifique à cette traversée.

### Résumé de l'invention

L'invention vise à remédier à cette problématique. L'invention a en effet pour but de fournir un procédé et un dispositif qui assurent une conduite autonome sûre et confortable au passage d'une bretelle de sortie d'une route à chaussées séparées. L'invention vise en particulier à fournir un procédé et un dispositif qui minimisent le risque que le système d'aide à la conduite d'un véhicule automobile engage de manière inappropriée le véhicule dans une bretelle de sortie d'une route à chaussées séparées.

Afin d'atteindre ces buts, l'invention concerne, selon un premier aspect, un procédé de conduite autonome d'un véhicule automobile sur les voies de circulation d'une route au moyen d'un dispositif informatique embarqué à bord du véhicule, le procédé comprenant les étapes de :
- acquérir des données caractérisant l'environnement de conduite du véhicule générées au moyen d'un appareil de détection d'un système d'aide à la conduite du véhicule ;
- déterminer, en fonction des données caractérisant l'environnement de conduite du véhicule, si l'environnement de conduite contient un premier panneau de signalisation indiquant une limitation de vitesse à 90 km/h qui se trouve situé en amont et à une distance inférieure à une première valeur seuil préétablie d'au moins un deuxième panneau de signalisation indiquant une première valeur de limitation de vitesse inférieure à 90km/h ; et, lorsqu'il est établi que tel est le cas,

- déterminer, en fonction des données caractérisant l'environnement de conduite du véhicule, si une glissière de sécurité se trouve située à droite du véhicule à une distance latérale supérieure à une valeur séparée du double de la largeur d'une voie de circulation de la route par une deuxième valeur seuil préétablie ; et, lorsqu'il est établi que tel est le cas,
- provoquer la réalisation par le véhicule d'une manœuvre au cours de laquelle il quitte la voie de circulation courante pour rejoindre la voie de circulation adjacente à droite ; ou, lorsqu'il est établi que tel n'est pas le cas,
- provoquer le maintien du véhicule sur la voie de circulation courante.

Selon une autre variante, la première valeur seuil peut être comprise entre dix mètres et trente mètres.

Selon encore une autre variante, la deuxième valeur seuil peut être inférieure à cinquante centimètres.

Selon un deuxième aspect, l'invention concerne un dispositif de conduite autonome d'un véhicule automobile sur les voies de circulation d'une route, le dispositif comprenant au moins une unité de traitement d'informations, comprenant au moins un processeur, et un support de stockage de données configurés pour mettre en œuvre un procédé tel que décrit ci-dessus.

Selon un troisième aspect, l'invention concerne un programme comprenant des instructions de code de programme pour l'exécution des étapes d'un procédé tel que décrit ci-dessus lorsque ledit programme est exécuté par au moins un processeur.

Selon un quatrième aspect, l'invention concerne un support utilisable dans un ordinateur, sur lequel un programme tel que décrit ci-dessus est enregistré.

Selon un cinquième aspect, l'invention concerne un véhicule automobile comprenant un dispositif tel que décrit ci-dessus.

### Brève description des figures

D'autres caractéristiques et avantages de l'invention apparaîtront à l'examen de la description détaillée ci-après, et des dessins annexés, sur lesquels :
[Fig. 1] est un schéma d'un véhicule selon l'invention mettant en œuvre un procédé selon l'invention ;
[Fig. 2] est un diagramme fonctionnel d'un dispositif selon l'invention ; et
[Fig. 3] est un organigramme des étapes d'un procédé selon l'invention.

### Description détaillée de l'invention

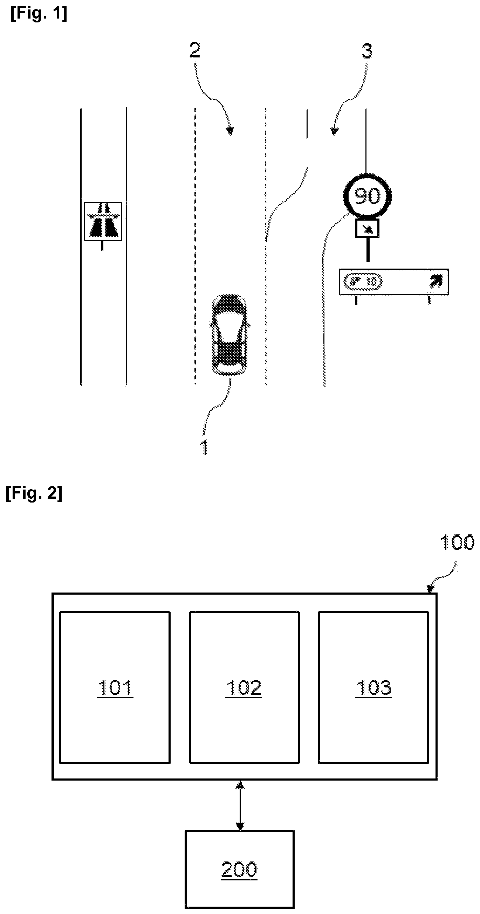

La figure 1 illustre schématiquement un véhicule automobile 1 selon l'invention dans un environnement de conduite dans lequel le procédé selon l'invention est mis en œuvre. Comme on le voit sur la figure, le véhicule 1 circule sur une route 2 à plusieurs voies de circulation, notamment une route à chaussées séparées, préférentiellement une autoroute, et il approche d'une bretelle de sortie 3 aménagée sur la route 2. Dans ce contexte, le véhicule 1 selon l'invention est équipé d'un système d'aide à la conduite et d'un dispositif de conduite autonome selon l'invention qui met en œuvre le procédé selon l'invention décrit ci-après pour gérer le guidage du véhicule de manière sûre et confortable au passage de la bretelle de sortie 3.

Le dispositif 100 de conduite autonome selon l'invention embarqué à bord du véhicule 1 selon l'invention est illustré sur la figure 2. Il s'agit d'un appareil informatique, qui comprend au moins une unité de traitement d'informations 101, comportant un ou plusieurs processeurs, un support de stockage de données 102, sur lequel est notamment enregistré un programme qui comprend des instructions de code de programme pour l'exécution des étapes du procédé selon l'invention décrit ci-après, et une interface d'entrée et sortie 103 permettant la réception et l'émission de données.

Selon un mode de réalisation de l'invention, le dispositif 100 selon l'invention est hébergé sur un ou plusieurs calculateurs, unités de commande électroniques ou autres boitiers télématiques du véhicule 1. Selon le mode de réalisation préféré, celui illustré sur la figure 2, le dispositif 100 selon l'invention est hébergé sur un calculateur indépendant et il interagit par le biais de son interface d'entrée et sortie 103 et au moyen d'un réseau de communication filaire du véhicule 1 (e.g. CAN, Ethernet) - matérialisé sur la figure par la flèche à double sens - avec un calculateur du système d'aide à la conduite 200 du véhicule. Selon un autre mode de réalisation, le dispositif 100 selon l'invention fait partie intégrante d'un calculateur du système d'aide à la conduite 200 du véhicule 1. Ainsi, quel que soit le mode de réalisation, le dispositif 100 selon l'invention est toujours en mesure d'interagir, par le biais de son interface d'entrée et sortie 103, non seulement avec le système d'aide à la conduite 200 du véhicule 1 automobile, mais également, via celui-ci, avec tout autre appareil qui, de manière conventionnelle, équipe et/ou interagit avec le système d'aide à la conduite 200.

Or, selon l'invention, le système d'aide à la conduite 200 du véhicule 1 comprend au moins un appareil de détection (e.g. lidar, radar, caméra, capteur à ultrasons, etc.), qu'il utilise pour percevoir l'environnement de conduite autour du véhicule, et un ou plusieurs calculateurs, ordinateurs et/ou processeurs dédiés, qui, en fonction de données brutes générées par l'appareil de détection, peuvent contrôler le fonctionnement de certains composants du véhicule qui gouvernent son déplacement (e.g. direction assistée électronique, correcteur électronique de trajectoire, ABS, régulateur de vitesse, etc.). Ainsi, en interagissant avec ou en faisant partie intégrante d'un tel système d'aide à la conduite, le dispositif 100 selon l'invention est notamment en mesure de déterminer la localisation et la nature de panneaux de signalisation ou d'autres éléments de l'infrastructure routière, comme les glissières de sécurité, qui sont présents dans l'environnement de conduite du véhicule 1. De plus, ces moyens permettent également au dispositif 100 selon l'invention de gérer de manière autonome le guidage du véhicule 1, pour, notamment, provoquer la réalisation de manœuvres de changement de voie de circulation ou, au contraire, le maintien du véhicule 1 sur une même voie de circulation.

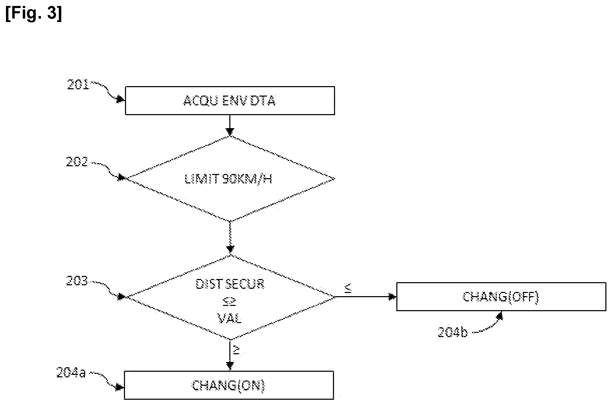

Selon l'invention, tous les éléments décrits ci-dessus contribuent pour permettre au dispositif 100 selon l'invention de mettre en œuvre un procédé de conduite autonome d'un véhicule automobile sur les voies de circulation d'une route, tel que décrit ci-dessous en lien avec les figures 1 et 3.

Selon une première étape 201 du procédé selon l'invention, le dispositif 100 selon l'invention acquiert des données caractérisant l'environnement de conduite du véhicule générées au moyen d'un appareil de détection du système d'aide à la conduite 200 du véhicule 1. Pour ce faire, le dispositif 100 selon l'invention interagit avec le système d'aide à la conduite 200, qui détermine conventionnellement une modélisation de l'environnement de conduite, i.e. les données caractérisant l'environnement de conduite, en utilisant des données brutes générées au moyen de son appareil de détection. Pour générer de telles données, lorsque l'appareil de détection qui fournit les données brutes est une caméra agencée sur le véhicule pour réaliser des prises de vues de l'environnement de conduite, le système d'aide à la conduite 200 effectue un traitement des prises de vues générées par la caméra pour localiser et catégoriser les objets mobiles ou statiques qui se trouvent dans l'environnement de conduite. Ainsi, au terme de cette première étape 201 du procédé selon l'invention, le dispositif 100 selon l'invention détient des données qui identifient et localisent des objets statiques, notamment des éléments de l'infrastructure routière (e.g. panneaux de signalisation, marquages au sol, glissières de sécurité), ou mobiles, par exemple d'autres véhicules, qui sont présents dans l'environnement de conduite du véhicule 1.

Ensuite, selon une deuxième étape 202 du procédé selon l'invention, le dispositif 100 selon l'invention détermine avantageusement, en fonction des données caractérisant l'environnement de conduite du véhicule qui ont été acquises au cours de l'étape précédente du procédé, si l'environnement de conduite contient un premier panneau de signalisation indiquant une limitation de vitesse à 90 km/h qui se trouve situé en amont et à une distance inférieure à une valeur seuil préétablie, par exemple inférieure à 50 mètres, d'au moins un deuxième panneau de signalisation indiquant une valeur de limitation de vitesse inférieure à 90km/h. En effet, sur une route à chaussées séparées, les bretelles de sorties se caractérisent par la présence d'une séquence de panneaux de limitations de vitesse décroissantes espacés de quelques dizaines de mètres, qui débute invariablement par un premier panneau de limitation de vitesse à 90 km/h. Ainsi, en déterminant si la présence d'un premier panneau de limitation à 90 km/h suivi à une distance relativement courte d'un deuxième panneau de limitation vitesse inférieure à 90 km/h, le dispositif 100 selon l'invention est en mesure d'identifier et de localiser une bretelle de sortie d'une route à chaussées séparées.

Et, lorsqu'il a établi au cours de l'étape précédente que l'environnement de conduite contient bien un premier panneau de signalisation indiquant une limitation de vitesse à 90 km/h qui se trouve situé en amont et à une distance inférieure à une valeur seuil préétablie d'au moins un deuxième panneau de signalisation indiquant une valeur de limitation de vitesse inférieure à 90km/h, ce qui signifie la présence d'une bretelle de sortie, le dispositif 100 selon l'invention réalise les étapes suivantes du procédé selon l'invention décrites ci-après.

Selon une troisième étape 203 du procédé selon l'invention, le dispositif 100 selon l'invention détermine avantageusement, en fonction des données caractérisant l'environnement de conduite du véhicule, si une glissière de sécurité se trouve située à droite du véhicule à une distance latérale supérieure à une valeur séparée du double de la largeur d'une voie de circulation de la route 2 par une deuxième valeur seuil préétablie, par exemple inférieure à 50 centimètres. Pour ce faire, le dispositif 100 selon l'invention détermine par exemple la largeur des voies de circulation de la route 2 à partir de marquages au sol détectés. Alternativement, la largeur d'une voie de circulation est préétablie et enregistrée sur le support de stockage de données 102 au moment de la conception du véhicule. En d'autres termes, le dispositif 100 selon l'invention cherche à ce stade à déterminer le positionnement latéral du véhicule sur les voies de circulation de la chaussée afin de déterminer, compte tenu de la présence de la bretelle de sortie, si une manœuvre de changement de voie vers la voie de circulation adjacente à droite peut être réalisée. Et, de manière avantageuse, il détermine cela en observant la distance latérale qui sépare le véhicule 1 d'une glissière de sécurité qui se trouve sur son côté droit. Ainsi, en se reportant à la figure 1, la voie adjacente à droite du véhicule est la bretelle de sortie et la glissière de sécurité (non représentée) se trouve forcément à une distance latérale du véhicule 1 qui est inférieure au double de la largeur d'une voie de circulation de la chaussée.

Ensuite, lorsqu'il a établi au cours de la troisième étape 203 du procédé qu'une glissière de sécurité se trouve bien située à droite du véhicule à une distance latérale supérieure à une valeur séparée du double de la largeur d'une voie de circulation de la route par une deuxième valeur seuil préétablie, le dispositif 100 selon l'invention réalise une quatrième et ultime étape 204a du procédé selon l'invention au cours de laquelle il provoque la réalisation par le véhicule d'une manœuvre au cours de laquelle il quitte la voie de circulation courante pour rejoindre la voie de circulation adjacente à droite, en interagissant pour ce faire avec le système d'aide à la conduite 200 du véhicule 1. Au contraire, lorsqu'il a établi au cours de la troisième étape 203 du procédé qu'une glissière de sécurité se trouve à droite du véhicule à une distante inférieure à une valeur séparée du double de la largeur d'une voie de circulation par une deuxième valeur seuil préétablie, comme illustré sur la figure 1, le dispositif 100 selon l'invention réalise avantageusement une quatrième et ultime étape 204b du procédé selon l'invention au cours de laquelle il provoque le maintien du véhicule sur la voie de circulation courante. En d'autres termes, le dispositif 100 selon l'invention interdit dans ce cas la réalisation d'une manœuvre de changement de voie de circulation vers la voie de circulation adjacente à droite, évitant ainsi que le véhicule 1 ne soit indûment engagé sur la bretelle de sortie 3.

Par conséquent, grâce au procédé et au dispositif selon l'invention décrits ci-dessus, une solution est fournie pour permettre une conduite autonome sûre et confortable au passage d'une bretelle de sortie d'une route à chaussées séparées.

## Revendications

1. Procédé de conduite autonome d'un véhicule automobile (1) sur les voies de circulation d'une route (2) au moyen d'un dispositif (100) informatique embarqué à bord du véhicule, et comprenant les étapes de :
• acquérir (201) des données caractérisant l'environnement de conduite du véhicule générées au moyen d'un appareil de détection d'un système d'aide à la conduite (200) du véhicule ;
• déterminer (202), en fonction des données caractérisant l'environnement de conduite du véhicule, si l'environnement de conduite contient un premier panneau de signalisation indiquant une limitation de vitesse à 90 km/h qui se trouve situé en amont et à une distance inférieure à une première valeur seuil préétablie d'au moins un deuxième panneau de signalisation indiquant une première valeur de limitation de vitesse inférieure à 90km/h ;
**caractérisé en ce que** lorsqu'il est établi que tel est le cas ledit procédé comprend les étapes supplémentaires suivantes:
• déterminer (203), en fonction des données caractérisant l'environnement de conduite du véhicule, si une glissière de sécurité se trouve située à droite du véhicule à une distance latérale supérieure à une valeur séparée du double de la largeur d'une voie de circulation de la route (2) par une deuxième valeur seuil préétablie ; et, lorsqu'il est établi que tel est le cas,
• provoquer (204a) la réalisation par le véhicule d'une manœuvre au cours de laquelle il quitte la voie de circulation courante pour rejoindre la voie de circulation adjacente à droite ; ou, lorsqu'il est établi que tel n'est pas le cas,
• provoquer (204b) le maintien du véhicule sur la voie de circulation courante.

2. Procédé selon l'une des revendications précédentes, **caractérisé en ce que** la première valeur seuil est comprise entre dix mètres et trente mètres.

3. Procédé selon l'une des revendications précédentes, **caractérisé en ce que** la deuxième valeur seuil est inférieure à cinquante centimètres.

4. Dispositif (100) de conduite autonome d'un véhicule automobile sur les voies de circulation d'une route, **caractérisé en ce que** le dispositif comprend au moins une unité de traitement d'informations (101), comprenant au moins un processeur, et un support de stockage de données (102) configurés pour mettre en œuvre un procédé selon l'une quelconque des revendications précédentes.

5. Programme d'ordinateur comprenant des instructions de code de programme pour l'exécution des étapes d'un procédé selon l'une quelconque des revendications 1 à 3 lorsque ledit programme est exécuté par au moins un processeur.

6. Support utilisable dans un ordinateur, **caractérisé en ce qu'**un programme selon la revendication 5 y est enregistré.

7. Véhicule automobile, **caractérisé en ce qu'**il comprend un dispositif (100) selon la revendication 4.

## Patentansprüche

1. Verfahren zum autonomen Fahren eines Kraftfahrzeugs (1) auf den Fahrspuren einer Straße (2) mittels einer im Fahrzeug eingebauten Computervorrichtung (100) und die Schritte:
• Erfassung (201) von Daten über die Fahrumgebung des Fahrzeugs, die mithilfe eines Erkennungsgeräts eines Fahrerassistenzsystems (200) des Fahrzeugs erzeugt werden;
• Bestimmung (202) in Abhängigkeit von den Daten, die die Fahrumgebung des Fahrzeugs charakterisieren, ob die Fahrumgebung ein erstes Verkehrszeichen enthält, das eine Geschwindigkeitsbegrenzung auf 90 km/h anzeigt, das sich stromaufwärts und in einer Entfernung unterhalb eines ersten voreingestellten Schwellenwerts von mindestens einem zweiten Verkehrszeichen befindet, das einen ersten Geschwindigkeitsbegrenzungswert unter 90 km/h anzeigt; **dadurch gekennzeichnet, dass** das Verfahren, wenn dies festgestellt wird, die folgenden zusätzlichen Schritte umfasst:
• auf der Grundlage der Daten zur Fahrumgebung des Fahrzeugs festzustellen (203), ob sich eine Leitplanke auf der rechten Seite des Fahrzeugs in einem seitlichen Abstand befindet, der größer ist als ein Wert, der durch einen zweiten vorgegebenen Schwellenwert vom Doppelten der Breite einer Fahrspur (2) getrennt ist, und, falls dies festgestellt wird,
• das Fahrzeug veranlasst (204a), ein Manöver auszuführen, bei dem es von der aktuellen Fahrspur auf die rechte angrenzende Fahrspur wechselt, oder, falls dies nicht erwiesen ist,
• das Fahrzeug auf der gleichen Fahrspur zu halten (204b).

2. Verfahren nach einem der vorhergehenden Ansprüche, **dadurch gekennzeichnet, dass** der erste Schwellenwert zwischen 10 m und 30 m liegt.

3. Verfahren nach einem der vorhergehenden Ansprüche, **dadurch gekennzeichnet, dass** der zweite Schwellenwert kleiner als fünfzig Zentimeter ist.

4. Vorrichtung (100) zum autonomen Führen eines Kraftfahrzeugs auf den Fahrspuren einer Straße, **dadurch gekennzeichnet, dass** die Vorrichtung mindestens eine Informationsverarbeitungseinheit (101), die mindestens einen Prozessor umfasst, und ein Datenspeichermedium (102) umfasst, das konfiguriert ist, um ein Verfahren nach einem der vorhergehenden Ansprüche auszuführen.

5. Computerprogramm mit Programmcodeanweisungen zum Ausführen der Schritte eines Verfahrens nach einem der Ansprüche 1 bis 3, wenn das Programm von mindestens einem Prozessor ausgeführt wird.

6. Computerverwendbares Medium, **dadurch gekennzeichnet, dass** ein Programm nach Anspruch 5 darauf aufgezeichnet ist.

7. Kraftfahrzeug, **dadurch gekennzeichnet, dass** es eine Vorrichtung (100) nach Anspruch 4 umfasst.

## Claims

1. Method for autonomous driving of a motor vehicle (1) on the traffic lanes of a road (2) by means of a computer device (100) on board the vehicle, and comprising the steps of:
• acquiring (201) data characterising the driving environment of the vehicle generated by means of a device for detecting a driver assistance system (200) of the vehicle;
• determine (202), based on the data characterising the driving environment of the vehicle, whether the driving environment contains a first road sign indicating a speed limit of 90 km/h which is located upstream and at a distance less than a first pre-established threshold value of at least one second road sign indicating a first speed limit value of less than 90 km/h; wherein, when this is established, the method comprises the following additional steps:
• determine (203), on the basis of the data characterising the driving environment of the vehicle, whether a safety slide is located to the right of the vehicle at a lateral distance greater than a value separated by twice the width of a highway taxiway (2) by a second pre-established threshold value; and, where it is established that this is the case,
• cause (204a) the vehicle to perform a manoeuvre in which it leaves the current taxiway to join the adjacent taxiway to the right; or, where it is determined that this is not the case,
• causing (204 b) the vehicle to remain on the current taxiway.

2. The method according to claim 1, **wherein** the first threshold value is between ten metres and thirty metres.

3. The method according to claim 1, **wherein** the second threshold value is less than fifty centimetres.

4. Device (100) for autonomous driving of a motor vehicle on the lanes of a highway, **wherein** the device comprises at least one information processing unit (101), comprising at least one processor, and a data storage medium (102) configured to implement a method according to any one of the previous claims.

5. Computer Plan comprising plan code instructions for executing the steps of a method according to any one of claims 1 to 3 when said plan is executed by at least one processor.

6. Medium usable in a computer, **wherein** a plan according to claim 5 is recorded therein.

7. Motor vehicle, **characterised in that** it comprises a device (100) according to claim 4.
